(19) Europäisches Patentamt
European Patent Office
Office européen des brevets

(11) **EP 1 958 816 B1**

(12) **FASCICULE DE BREVET EUROPEEN**

(45) Date de publication et mention
de la délivrance du brevet:
**31.08.2011 Bulletin 2011/35**

(51) Int Cl.:
**B64D 11/06** *(2006.01)*   **G05B 19/35** *(2006.01)*
**B60N 2/02** *(2006.01)*   **G05B 19/042** *(2006.01)*

(21) Numéro de dépôt: **08101583.6**

(22) Date de dépôt: **13.02.2008**

(54) **Procédé et dispositif de commande d'un siège**

Verfahren und Vorrichtung zur Betätigung eines Sitzes

Device and method for controlling a seat

(84) Etats contractants désignés:
**DE FR GB IT**

(30) Priorité: **16.02.2007 FR 0753309**

(43) Date de publication de la demande:
**20.08.2008 Bulletin 2008/34**

(73) Titulaire: **Precilec**
**89000 Auxerre (FR)**

(72) Inventeur: **Nivet, Laurent**
**91190 Gif sur Yvette (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A- 1 103 412   EP-A1- 0 973 079**
**EP-A1- 1 147 938   EP-A1- 1 205 133**
**EP-A1- 1 298 508**

## Description

La présente invention concerne un procédé de commande d'un siège muni d'un actionneur de manoeuvre d'un élément mobile du siège.

De nos jours, les sièges notamment d'avion sont équipés d'actionneurs électriques permettant le déplacement des éléments du siège les uns par rapport aux autres.

EP 1 205 133 A1 décrit un siège de ce type avec procédé de commande.

Les actionneurs sont couramment équipés de potentiomètres permettant de déterminer la position relative des éléments commandés par l'actionneur en fonction de l'état de l'actionneur.

Lors de l'installation du siège, il est nécessaire de calibrer chaque actionneur, et notamment le potentiomètre équipant l'actionneur. A cet effet, les éléments de siège commandés par l'actionneur sont déplacés entre leur deux positions extrêmes et les valeurs correspondantes relevées par le potentiomètre de l'actionneur sont mémorisées.

L'opérateur en charge de cette opération de calibration doit donc déplacer manuellement l'élément de siège entre ses deux positions extrêmes. Pour ce faire, il convient, soit qu'il utilise l'actionneur en commandant celui-ci depuis le clavier adapté, soit qu'il déplace manuellement l'élément de siège en appliquant une force supérieure à l'effort de retenue imposée par l'actionneur non alimenté.

En pratique, le déplacement de l'élément de siège est rendu délicat pour l'opérateur, soit que celui-ci n'est pas à proximité du clavier, soit qu'il est nécessaire d'exercer un effort très important pour vaincre l'effort de retenue de l'actionneur.

L'invention a pour but de proposer un procédé et un siège qui permettent une manipulation simplifiée pour un utilisateur, notamment lors des phases de calibration.

A cet effet, l'invention a pour objet un procédé de commande du type précité, caractérisé en ce qu'il comporte :

- la mesure de l'effort appliqué manuellement par un utilisateur sur ledit élément mobile ;
- le pilotage de l'actionneur pour le déplacement dudit élément mobile dans le sens de l'effort appliqué manuellement par l'utilisateur sur l'élément mobile.

L'invention a également pour objet un siège muni d'au moins deux éléments mobiles l'un par rapport à l'autre et d'un actionneur de manoeuvre d'un élément mobile, d'une unité de pilotage de l'actionneur permettant de déplacer l'élément mobile, caractérisé en ce qu'il comporte :

- des moyens de mesure d'un effort appliqué manuellement par un utilisateur sur l'élément mobile,

- l'unité de pilotage comporte :

  • des moyens de calcul de l'effort théorique devant être appliqué par l'actionneur sur l'élément mobile dans le sens de l'effort appliqué manuellement par l'utilisateur sur l'élément mobile ; et
  • des moyens de commande de l'actionneur permettant de déplacer ledit élément mobile en fonction dudit effort théorique.

Suivant des modes particuliers de réalisation, le siège comporte l'une ou plusieurs des caractéristiques suivantes :

- les moyens de mesure de l'effort appliqué manuellement par un utilisateur sur l'élément mobile comportent :

  • des moyens de mesure d'un effort total appliqué à l'élément mobile, et

  • des moyens de calcul de l'effort appliqué manuellement par un utilisateur à partir de l'effort total mesuré et d'un effort théorique antérieur appliqué par l'actionneur sur l'élément mobile ;

- les moyens de calcul de l'effort appliqué par l'utilisateur sont adaptés pour corriger la valeur obtenue à partir de l'effort total mesuré et de l'effort théorique appliqué par l'actionneur sur l'élément mobile à partir d'un effort statique propre au siège pour ledit élément mobile ;
- le siège comporte des moyens d'estimation de l'effort statique propre au siège pour ledit élément mobile par estimation des courants consommés par l'actionneur lors du déplacement dudit élément mobile dans les deux sens opposés ;
- les moyens de mesure de l'effort appliqué manuellement par l'utilisateur sur l'élément mobile comportent des moyens de mesure du courant consommé par l'actionneur ;
- les moyens de calcul de l'effort théorique sont propres à déterminer l'effort théorique comme une fonction de l'effort appliqué manuellement par l'utilisateur sur l'élément mobile ; et
- le siège est dépourvu de clavier de commande de l'actionneur de manoeuvre.

L'invention sera mieux comprise à la lecture de la description qui va suivre, donnée uniquement à titre d'exemple et faite en se référant aux dessins, sur lesquels :

- la figure 1 est une vue schématique d'un siège selon l'invention ;
- la figure 2 est une vue à plus grande échelle de l'unité de pilotage du siège de la figure 1 ;
- la figure 3 est un organigramme du fonctionnement de l'unité centrale du siège lors d'une phase de déplacement d'un élément de siège ; et

- la figure 4 est un organigramme de la séquence de précalibration mise en oeuvre par l'unité centrale de pilotage du siège.

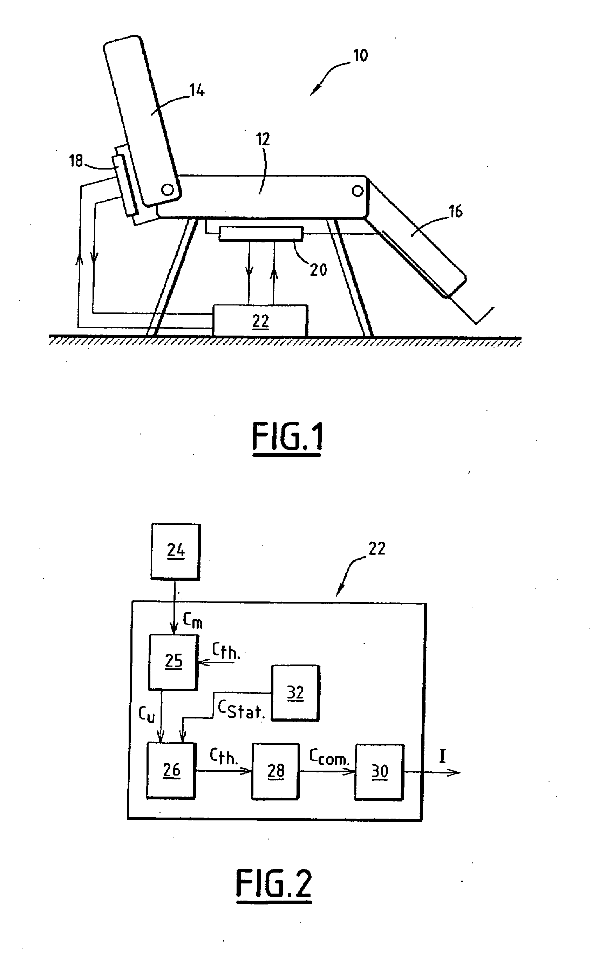

Sur la figure 1 est illustré un siège, et notamment un siège d'avion. Celui-ci comporte une assise 12 à une extrémité de laquelle est articulé un dossier 14 et à l'autre extrémité de laquelle est articulé un repose-jambes 16. Le dossier 14 et le repose-jambes 16 sont articulés par rapport à l'assise et sont déplaçables sous l'action d'un actionneur respectivement 18, 20 dont une extrémité est reliée à l'assise et dont l'autre extrémité est reliée, respectivement, au dossier 14 et au repose-jambes 16.

Les actionneurs 18, 20 comprennent chacun un moteur électrique relié pour son alimentation à une unité centrale de pilotage 22 du siège.

Cette unité 22 comporte des moyens de mise en forme du courant/tension pour l'alimentation de l'actionneur en vue de son déplacement dans un sens ou dans l'autre.

En outre, chaque actionneur est équipé d'un potentiomètre permettant de déterminer son état et la position relative des éléments du siège entre lesquels il est disposé. Ce potentiomètre est relié, pour chaque actionneur, à l'unité centrale de pilotage 22 à laquelle il est propre à fournir une valeur représentative de la position.

Selon l'invention, chaque actionneur 18, 20 est équipé d'un moyen 24 de mesure de l'effort $C_m$ appliqué sur l'actionneur.

Suivant un premier mode de réalisation, ce moyen 24 est formé par un capteur d'effort disposé entre les deux parties mobiles de l'actionneur.

En variante, et de préférence, le moyen 24 de mesure de l'effort est constitué d'un capteur de courant propre à mesurer le courant, et/ou la dérivée du courant par rapport au temps, circulant dans le bobinage du moteur. En l'absence d'alimentation, ce courant est induit par la mise en rotation du moteur sous l'action du déplacement de l'élément de siège provoqué par l'opérateur.

L'unité centrale de pilotage 22 comporte une unité 25 de mesure de l'effort $C_u$ appliqué manuellement par l'opérateur sur un élément du siège à partir de la mesure $C_m$ effectuée, de l'effort théorique $C_{th}$ antérieur normalement appliqué par l'actionneur et de l'effort statique $C_{stat}$, comme cela sera décrit ultérieurement.

Elle comporte en outre une unité 26 de calcul de l'effort théorique $C_{th}$ devant être fourni par l'actionneur en fonction de l'effort $C_u$ calculé comme étant appliqué par l'opérateur. Une unité 28 de calcul d'une consigne $C_{com}$ en fonction de l'effort théorique $C_{th}$ calculé est prévue dans l'unité centrale de pilotage 22. Elle est reliée à des moyens 30 de mise en forme du courant/tension pour la commande de l'actionneur afin d'obtenir l'effort de consigne $C_{com}$.

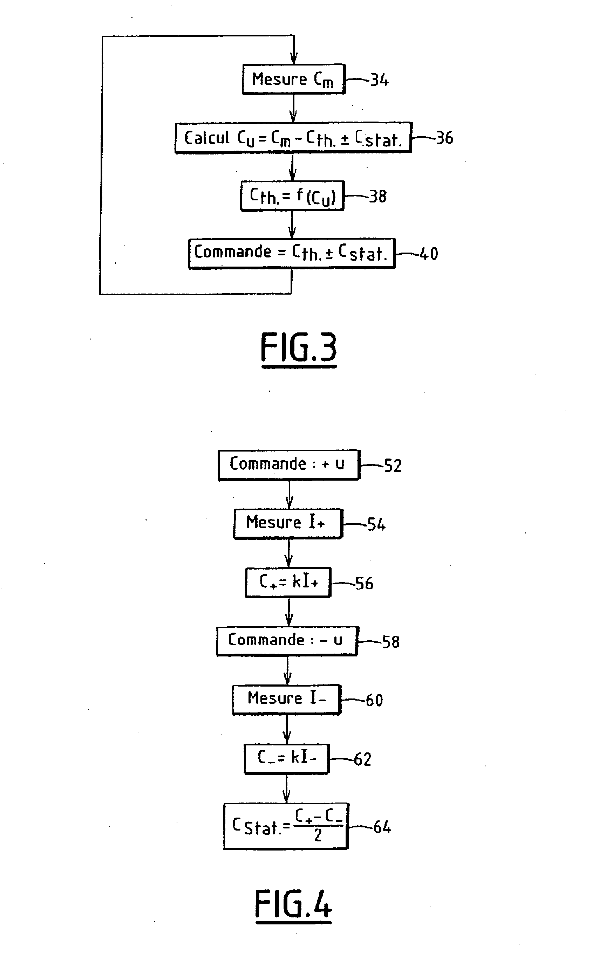

Enfin, l'unité centrale de pilotage 22 comporte une unité 32 d'estimation de l'effort statique $C_{stat}$ propre au siège pour ledit élément mobile. Cette unité 32 est propre à mettre en oeuvre un processus de pré-calibration pour déterminer l'effort statique $C_{stat}$, comme cela sera détaillé en regard de la figure 4.

Les différentes unités sont pilotées afin de mettre en oeuvre l'organigramme illustré sur la figure 3 lorsque le siège est en mode de calibration.

Ainsi, à l'étape 34, l'effort $C_m$ appliqué sur l'élément de siège est mesuré par le moyen 24 de mesure d'effort prévu dans l'actionneur.

A l'étape 36, l'unité 25 détermine l'effort $C_u$ appliqué manuellement par l'opérateur directement sur l'élément de siège. Cet effort de l'opérateur est égal l'effort mesuré $C_m$ auquel est soustrait l'effort théorique antérieur $C_{th}$ appliqué par l'actionneur et résultant de l'alimentation de celui-ci ainsi que l'effort statique $C_{stat}$ résultant des frottements mécaniques dus à l'assemblage du siège. Ainsi, l'effort manuel $C_u$ appliqué par l'opérateur est donné par :

$$C_u = C_m - C_{th} \pm C_{stat}.$$

A l'étape 38, un nouvel effort théorique $C_{th}$ devant être fourni par l'actionneur est déterminé par l'unité 28 en fonction de l'effort manuel $C_u$ appliqué par l'opérateur suivant une fonction f prédéterminée. Cette fonction est par exemple une fonction affine.

A l'étape 40, une commande $C_{com}$ est déterminée en fonction de l'effort théorique $C_{th}$ préalablement calculé auquel est ajouté l'effort statique $C_{stat}$ du siège.

Les étapes 34 à 40 sont répétées en continu tant que le siège est maintenu dans ce mode dit "mode de calibration".

On comprend que dans ce mode de fonctionnement, en l'absence de l'effort appliqué par l'opérateur sur l'élément de siège, l'effort théorique est nul, de sorte que l'actionneur n'est pas alimenté et l'élément de siège reste immobile.

Lorsque l'opérateur applique un effort sur l'élément de siège, cet effort étant supérieur à un seuil prédéterminé, et notamment supérieur à l'effort statique $C_{stat}$, cet effort est déterminé par l'unité centrale de pilotage 22 qui calcule un nouvel effort théorique $C_{th}$ correspondant à l'étape 38 et assure une commande de l'actionneur en fonction de ce nouvel effort théorique $C_{th}$ calculé.

Ainsi, l'actionneur agit dans un sens tel qu'il participe au déplacement de l'élément de siège évitant à l'opérateur d'avoir à fournir un effort trop important pour déplacer l'élément de siège. Tant qu'un effort est appliqué par l'opérateur, l'élément de siège est déplacé. Lorsque l'opérateur applique un effort en sens inverse, l'actionneur est d'abord arrêté puis, si l'effort est maintenu, l'actionneur déplace l'élément de siège en sens inverse.

On comprend qu'avec un tel dispositif, une assistance est fournie à l'opérateur pour déplacer le siège dans un sens ou dans l'autre.

Sur la figure 4 est représenté un organigramme de l'algorithme mis en oeuvre pour la détermination de l'effort statique $C_{stat}$ et l'étalonnage de l'unité centrale de pilotage 22. Ainsi, alors que le mode de calibration n'est pas encore sélectionné et qu'un mode de précalibration est sélectionné, une consigne prédéterminée +u est appliquée à l'actionneur pour provoquer le déplacement de l'élément de siège dans un premier sens, à l'étape 52.

A l'étape 54, le courant $I_+$ consommé par le moteur est mesuré. Un effort $C_+$ correspondant au déplacement dans le premier sens est calculé, à l'étape 56.

De même, à l'étape 58, une commande -u opposée à la commande appliquée à l'étape 52 est imposée à l'actionneur. Aux étapes 60 et 62, le courant 1 consommé par le moteur et l'effort $C_-$ correspondant fourni par l'actionneur sont déterminés.

Enfin, à l'étape 64, l'effort statique $C_{stat}$ est déterminé comme étant la moyenne des efforts mesurés dans les deux sens de déplacement de l'élément de siège ie :

$$C_{stat} = \frac{C_+ - C_-}{2}.$$

Suivant une variante de réalisation, l'élément de siège est déverrouillé et est libéré afin qu'il chute sous l'action de la seule masse de l'élément de siège en agissant sur l'actionneur. Le courant engendré dans le moteur de l'actionneur lors de la chute de l'élément de siège est mesuré et l'effort statique est déduit.

Un tel procédé de commande et un tel système de commande peuvent être mis en oeuvre dans un siège en exploitation en remplacement du clavier habituellement prévu sur le siège. Le siège est alors dépourvu de clavier ou le siège comporte un clavier et les actionneurs peuvent être pilotés indifféremment soit depuis le clavier, soit depuis le système de commande.

Dans un tel siège, le passager souhaitant modifier la configuration du siège exerce un effort sur l'élément à déplacer et l'actionneur associé assure le déplacement de l'élément.

**Revendications**

1. Procédé de commande d'un siège (10) muni d'un actionneur (18, 20) de manoeuvre d'un élément mobile (14, 16) du siège, **caractérisé en ce qu'**il comporte :

   - la mesure (34) de l'effort ($C_u$) appliqué manuellement par un utilisateur sur ledit élément mobile (14,16) ;
   - le pilotage (40) de l'actionneur (18, 20) permettant de déplacer ledit élément mobile (14, 16) dans le sens de l'effort ($C_u$) appliqué manuellement par l'utilisateur sur l'élément mobile (14, 16).

2. Siège muni d'au moins deux éléments mobiles (12, 14 ; 16, 18) l'un par rapport à l'autre et d'un actionneur (18, 20) de manoeuvre d'un élément mobile (14, 16), d'une unité (22) de pilotage de l'actionneur (18, 20) pour le déplacement de l'élément mobile (14, 16), **caractérisé en ce qu'**il comporte :

   - des moyens (24, 25) de mesure d'un effort ($C_u$) appliqué manuellement par un utilisateur sur l'élément mobile (14, 16),
   - l'unité de pilotage comporte :

     . des moyens (26) de calcul de l'effort théorique ($C_{th}$) devant être appliqué par l'actionneur (18, 20) sur l'élément mobile (14, 16) dans le sens de l'effort ($C_u$) appliqué manuellement par l'utilisateur sur l'élément mobile (14, 16) ; et
     . des moyens (28, 30) de commande de l'actionneur (18, 20) permettant de déplacer ledit élément mobile (14,16) en fonction dudit effort théorique ($C_{th}$).

3. Siège selon la revendication 2, **caractérisé en ce que** les moyens de mesure de l'effort ($C_u$) appliqué manuellement par un utilisateur sur l'élément mobile (14, 16) comportent :

   - des moyens (24) de mesure d'un effort total ($C_m$) appliqué à l'élément mobile (14, 16), et
   - des moyens (25) de calcul de l'effort ($C_u$) appliqué manuellement par un utilisateur à partir de l'effort total ($C_m$) mesuré et d'un effort théorique antérieur ($C_{th}$) appliqué par l'actionneur (18, 20) sur l'élément mobile (14, 16).

4. Siège selon la revendication 3, **caractérisé en ce que** les moyens (25) de calcul de l'effort ($C_u$) appliqué par l'utilisateur sont adaptés pour corriger la valeur obtenue à partir de l'effort total ($C_m$) mesuré et de l'effort théorique ($C_{th}$) appliqué par l'actionneur (18, 20) sur l'élément mobile (14, 16) à partir d'un effort statique ($C_{stat}$) propre au siège pour ledit élément mobile (14, 16).

5. Siège selon la revendication 4, **caractérisé en ce qu'**il comporte des moyens (32) d'estimation de l'effort statique ($C_{stat}$) propre au siège pour ledit élément mobile (14, 16) par estimation des courants consommés par l'actionneur (18, 20) lors du déplacement dudit élément mobile (14, 16) dans les deux sens opposés.

6. Siège selon l'une quelconque des revendications 2 à 5, **caractérisé en ce que** les moyens (25) de mesure de l'effort (C$_u$) appliqué manuellement par l'utilisateur sur l'élément mobile (14, 16) comportent des moyens de mesure du courant consommé par l'actionneur (18, 20).

7. Siège selon l'une quelconque des revendications 2 à 6, **caractérisé en ce que** les moyens (26) de calcul de l'effort théorique (C$_{th}$) sont propres à déterminer l'effort théorique (C$_{th}$) comme une fonction de l'effort (C$_u$) appliqué manuellement par l'utilisateur sur l'élément mobile (14, 16).

8. Siège selon l'une quelconque des revendications 2 à 7, **caractérisé en ce qu'**il est dépourvu de clavier de commande de l'actionneur (18, 20) de manoeuvre.

**Claims**

1. Method for controlling a seat (10) which is provided with an actuator (18, 20) for manoeuvring a movable element (14, 16) of the seat, **characterised in that** it involves:

   - measuring (34) the force (C$_u$) applied manually to the movable element (14, 16) by a user;
   - controlling (40) the actuator (18, 20) enabling the movement of the movable element (14, 16) in the direction of the force (C$_u$) applied manually to the movable element (14, 16) by the user.

2. Seat which is provided with at least two elements (12, 14; 16, 18) which can be moved relative to each other and an actuator (18, 20) for manoeuvring a movable element (14, 16), a unit (22) for controlling the actuator (18, 20) for the movement of the movable element (14, 16), **characterised in that** it comprises:

   - means (24, 25) for measuring a force (C$_u$) applied manually by a user to the movable element (14, 16),
   - the control unit comprises:

     • means (26) for calculating the theoretical force (C$_{th}$) which must be applied by the actuator (18, 20) to the movable element (14, 16) in the direction of the force (C$_u$) applied manually to the movable element (14, 16) by the user; and
     • means (28, 30) for controlling the actuator (18, 20) enabling the movement of the movable element (14, 16) in accordance with the theoretical force (C$_{th}$).

3. Seat according to claim 2, **characterised in that** the means for measuring the force (C$_u$) applied manually by a user to the movable element (14, 16) comprise:

   • means (24) for measuring a total force (C$_m$) applied to the movable element (14, 16), and
   • means (25) for calculating the force (C$_u$) applied manually by a user based on the total force (C$_m$) measured and a prior theoretical force (C$_{th}$) applied by the actuator (18, 20) to the movable element (14, 16).

4. Seat according to claim 3, **characterised in that** the means (25) for calculating the force (C$_u$) applied by the user are suitable for correcting the value obtained based on the total force (C$_m$) measured and the theoretical force (C$_{th}$) applied by the actuator (18, 20) to the movable element (14, 16) based on a static force (C$_{stat}$) specific to the seat for the movable element (14, 16).

5. Seat according to claim 4, **characterised in that** it comprises means (32) for estimating the static force (C$_{stat}$) specific to the seat for the movable element (14, 16) by estimating the currents consumed by the actuator (18, 20) during the movement of the movable element (14, 16) in the two opposing directions.

6. Seat according to any one of claims 2 to 5, **characterised in that** the means (25) for measuring the force (C$_u$) applied manually to the movable element (14, 16) by the user comprise means for measuring the current consumed by the actuator (18, 20).

7. Seat according to any one of claims 2 to 6, **characterised in that** the means (26) for calculating the theoretical force (C$_{th}$) are capable of determining the theoretical force (C$_{th}$) as a function of the force (C$_u$) applied manually to the movable element (14, 16) by the user.

8. Seat according to any one of claims 2 to 7, **characterised in that** it has no keypad for controlling the manoeuvring actuator (18, 20).

**Patentansprüche**

1. Verfahren zum Betätigen eines Sitzes (10), der mit einem Stellglied (18, 20) zum Betreiben eines beweglichen Elementes (14, 16) des Sitzes versehen ist, **dadurch gekennzeichnet,**
**dass** es folgendes umfaßt:

   - das Messen (34) der Kraft (C$_u$), die von einem Benutzer manuell auf das bewegliche Element (14, 16) aufgebracht wird;
   - das Ansteuern (40) des Stellgliedes (18, 20), das es ermöglicht, das bewegliche Element (14, 16) in der Richtung der vom Benutzer manuell auf das bewegliche Element (14, 16) aufgebrachten Kraft ($C_u$) zu verschieben.

2. Sitz, der mit mindestens zwei relativ zueinander beweglichen Elementen (12, 14; 16, 18) und mit einem Stellglied (18, 20) zum Betreiben eines beweglichen Elementes (14, 16), und mit einer Einheit (22) zum Ansteuern des Stellgliedes (18, 20) für eine Verschiebung des beweglichen Elementes (14, 16) versehen ist,
   **dadurch gekennzeichnet,**
   **dass** er folgendes aufweist:

   - Einrichtungen (24, 25) zum Messen einer Kraft ($C_u$), die von einem Benutzer manuell auf das bewegliche Element (14, 16) aufgebraucht wird,
   - wobei die Einheit zum Ansteuern folgendes aufweist:

   -- Einrichtungen (26) zum Berechnen der theoretischen Kraft ($C_{th}$), die vom Stellglied (18, 20) in der Richtung der vom Benutzer manuell auf das bewegliche Element (14, 16) aufgebrachten Kraft ($C_u$) auf das bewegliche Element (14, 16) aufgebracht werden muss; und
   -- Einrichtungen (28, 30) zum Betätigen des Stellgliedes (18, 20), das es ermöglicht, das bewegliche Element (14, 16) in Abhängigkeit von der theoretischen Kraft ($C_{th}$) zu verschieben.

3. Sitz nach Anspruch 2,
   **dadurch gekennzeichnet,**
   **dass** die Einrichtungen zum Messen der von einem Benutzer manuell auf das bewegliche Element (14, 16) aufgebrachten Kraft ($C_u$) folgendes aufweisen:

   - Einrichtungen (24) zum Messen einer Gesamtkraft ($C_m$), die auf das bewegliche Element (14, 16) aufgebracht wird, und
   - Einrichtungen (25) zum Berechnen der von einem Benutzer manuell aufgebrachten Kraft ($C_u$) auf der Grundlage der gemessenen Gesamtkraft ($C_m$) und einer vorherigen, vom Stellglied (18, 20) auf das bewegliche Element (14, 16) aufgebrachten theoretischen Kraft ($C_{th}$).

4. Sitz nach Anspruch 3,
   **dadurch gekennzeichnet,**
   **dass** die Einrichtungen (25) zum Berechnen der vom Benutzer aufgebrachten Kraft ($C_u$) dazu ausgelegt sind, den Wert, der auf der Grundlage der gemessenen Gesamtkraft ($C_m$) und der vom Stellglied (18, 20) auf das bewegliche Element (14, 16) aufgebrachten theoretischen Kraft ($C_{th}$) erhalten worden ist, auf der Grundlage einer statischen Kraft ($C_{stat}$) zu korrigieren, die dem Sitz für das bewegliche Element (14, 16) zu eigen ist.

5. Sitz nach Anspruch 4,
   **dadurch gekennzeichnet,**
   **dass** er Einrichtungen (32) aufweist, welche die dem Sitz für das bewegliche Element (14, 16) zu eigene statische Kraft ($C_{stat}$) schätzen, indem sie die Ströme schätzen, die von dem Stellglied (18, 20) bei der Verschiebung des beweglichen Elementes (14, 16) in den beiden entgegengesetzten Richtungen verbraucht werden.

6. Sitz nach einem der Ansprüche 2 bis 5,
   **dadurch gekennzeichnet,**
   **dass** die Einrichtungen (25) zum Messen der vom Benutzer manuell auf das bewegliche Element (14, 16) aufgebrachten Kraft ($C_u$) Einrichtungen zum Messen des vom Stellglied (18, 20) verbrauchten Stroms aufweisen.

7. Sitz nach einem der Ansprüche 2 bis 6,
   **dadurch gekennzeichnet,**
   **dass** die Einrichtungen (26) zum Berechnen der theoretischen Kraft ($C_{th}$) dazu geeignet sind, die theoretische Kraft ($C_{th}$) als eine Funktion der vom Benutzer manuell auf das bewegliche Element (14, 16) aufgebrachten Kraft ($C_u$) zu bestimmen.

8. Sitz nach einem der Ansprüche 2 bis 7,
   **dadurch gekennzeichnet,**
   **dass** er keine Tastatur zum Betätigen des betreibenden Stellgliedes (18, 20) aufweist.

FIG.1

FIG.2

Mesure $C_m$ —34

Calcul $C_u = C_m - C_{th.} \pm C_{stat.}$ —36

$C_{th.} = f(C_u)$ —38

Commande = $C_{th.} \pm C_{stat.}$ —40

## FIG.3

Commande : $+ u$ —52

Mesure $I+$ —54

$C_+ = kI+$ —56

Commande : $- u$ —58

Mesure $I-$ —60

$C_- = kI-$ —62

$C_{Stat.} = \dfrac{C_+ - C_-}{2}$ —64

## FIG.4

**RÉFÉRENCES CITÉES DANS LA DESCRIPTION**

**Documents brevets cités dans la description**

- EP 1205133 A1